# EUROPEAN PATENT APPLICATION

(11) **EP 4 411 880 A1**
(43) Date of publication of application: **07.08.2024**
(21) Application number: 23769520.0
(22) Date of filing: 21.02.2023
(51) Int. Cl.: H01M 4/36, H01M 4/131, H01M 4/58

(54) **POSITIVE ELECTRODE SHEET, LITHIUM-ION SECONDARY BATTERY, BATTERY MODULE, BATTERY PACK, AND ELECTRICAL APPARATUS**

(30) Priority: 14.03.2022 CN 202210246572
(71) Applicant: Contemporary Amperex Technology Co., Limited, Ningde, Fujian 352100 (CN)
(72) Inventor: ZHU, Yinghua, Ningde, Fujian 352100 (CN); SHI, Songjun, Ningde, Fujian 352100 (CN); LAI, Youlei, Ningde, Fujian 352100 (CN); TONG, Xing, Ningde, Fujian 352100 (CN)
(74) Representative: Kraus & Lederer PartGmbB
(86) International application number: PCT/CN2023/077399
(87) International publication number: WO 2023/174012

(57) **Abstract**

This application provides a positive electrode plate, a lithium-ion secondary battery, a battery module, a battery pack, and an electrical device. The positive electrode plate of this application includes: a current collector, a first coating layer applied on both sides of the current collector, and a second coating layer applied on a surface of the first coating layer. The first coating layer contains a small-grained olivine-structured phosphate compound, and a particle size of the small-grained olivine-structured phosphate compound is 0.5 to 2 µm. The second coating layer contains: a large-grained olivine-structured phosphate compound and a layered transition metal oxide; or a large-grained olivine-structured phosphate compound and a pure layered transition metal oxide. A particle size of the large-grained olivine-structured phosphate compound is larger than a particle size of the small-grained olivine-structured phosphate compound. The positive electrode plate of this application can suppress overdischarge on the surface of the layered transition metal oxide, improve the charge-discharge capabilities of the lithium-ion secondary battery, and enhance cycle stability.

## Description

This application claims priority to Chinese Patent Application No. 202210246572.2, filed with the Chinese Patent Office on March 14, 2022, which is incorporated herein by reference in its entirety.

### TECHNICAL FIELD

This application relates to the battery field, and in particular, to a positive electrode plate, a lithium-ion secondary battery, a battery module, a battery pack, and an electrical device.

### BACKGROUND

By virtue of a high energy density, lithium-ion secondary batteries have been widely used in various electric tools such as electric vehicles and mobile phones. Users are putting forward higher requirements on the cost, energy density, and safety of the lithium-ion secondary batteries.

### TECHNICAL PROBLEMS

This application is made in view of the above subject matter. An objective of this application is to provide a positive electrode plate, a lithium-ion secondary battery, a battery module, a battery pack, and an electrical device. The positive electrode plate can suppress overdischarge on a lithium surface, improve the charge-discharge capabilities of the lithium-ion secondary battery, and enhance cycle stability.

The inventor hereof finds that, in order to improve the charge-discharge capabilities, an olivine-structured phosphate compound such as lithium iron phosphate and lithium manganese iron phosphate are typically nanoparticles. If the nanoscale lithium iron phosphate or lithium manganese iron phosphate is directly mixed with the layered transition metal oxide, gelation will occur during stirring, and the performance will fade rapidly. Therefore, a countermeasure is to divide the olivine-structured phosphate compound such as lithium iron phosphate and lithium manganese iron phosphate into a small-grained part and a large-grained part, apply the small-grained part separately on both sides of the current collector to form a coating layer, and then mix the large-grained part with the layered transition metal oxide or pure layered transition metal oxide, and apply the mixture onto the formed coating layer, thereby solving the problems of gelation during stirring and rapid fading of performance, and in turn, suppressing overdischarge on the surface of the layered transition metal oxide, improving the charge-discharge capabilities of the lithium-ion secondary battery, and enhancing the cycle stability.

### TECHNICAL SOLUTIONS

To achieve the above objectives, a first aspect of this application is to provide a positive electrode plate. The positive electrode plate includes: a current collector, a first coating layer applied on both sides of the current collector, and a second coating layer applied on a surface of the first coating layer.

The first coating layer contains a small-grained olivine-structured phosphate compound, and a particle size of the small-grained olivine-structured phosphate compound is 0.5 to 2 µm.

The second coating layer contains: a large-grained olivine-structured phosphate compound and a layered transition metal oxide; or a large-grained olivine-structured phosphate compound and a pure layered transition metal oxide. A particle size of the large-grained olivine-structured phosphate compound is larger than a particle size of the small-grained olivine-structured phosphate compound.

The small-grained olivine-structured phosphate compound with a particle size of 0.5 to 2 µm is separately applied on both sides of the current collector to form the first coating layer. The large-grained olivine-structured phosphate compound with a particle size larger than the small-grained olivine-structured phosphate compound is mixed with the layered transition metal oxide material or pure layered transition metal oxide material, and then the mixture is applied onto the first coating layer to form the second coating layer. In this way, the charge-discharge capabilities of the small-grained olivine-structured phosphate compound are retained, and at the same time, the small-grained olivine-structured phosphate compound can be isolated from the layered transition metal oxide, thereby solving the following problem: in a charge or discharge process, the solid-phase concentration polarization of the small-grained olivine-structured phosphate compound is low but the solid-phase concentration polarization of the layered transition metal oxide material is high, the two types of compounds come into contact to generate an equilibrium potential difference to cause the problem of overdischarge of the layered transition metal oxide material.

In some embodiments, in the positive electrode plate of this application, the olivine-structured phosphate compound is at least one selected from lithium iron phosphate or lithium manganese iron phosphate.

In some embodiments, in the positive electrode plate of this application, the layered transition metal oxide is at least one selected from lithium cobalt oxide, lithium nickel cobalt manganese oxide, or lithium nickel cobalt aluminum oxide; and the pure layered transition metal oxide is at least one selected from lithium nickel cobalt manganese oxide or lithium nickel cobalt aluminum oxide.

In some embodiments, in the positive electrode plate of this application, a thickness of the first coating layer is 2 to 200 µm. If the first coating layer is unduly thick, the coating is prone to be detached from the electrode plate. If the first coating layer is unduly thin, the kinetics of the small-grained material in the lower layer is unable to be effectively utilized, the charge capabilities of the electrode are unable to be improved, and the processing efficiency is low. Therefore, by controlling the thickness of the first coating layer to fall within the range of 2 to 200 µm, the kinetic performance of the electrode can be improved, the deterioration of the charge-discharge capabilities of the lower-layer material caused by a long diffusion path can be compensated for, and the coating is prevented from being detached from the electrode plate.

In some embodiments, in the positive electrode plate of this application, a thickness of the second coating layer is 2 to 400 µm. If the second coating layer is unduly thick, the coating is prone to be detached from the electrode plate, and the kinetics is low. If the second coating layer is unduly thin, the high capacity of the layered transition metal oxide is unable to be fully utilized. Therefore, by controlling the thickness of the second coating layer to fall within the range of 2 to 400 µm, this application achieves high processing performance, high kinetic performance, and a high energy density.

A second aspect of this application provides a lithium-ion secondary battery. The lithium-ion secondary battery includes the positive electrode plate according to the first aspect of this application.

A third aspect of this application provides a battery module. The battery module includes the lithium-ion secondary battery according to the second aspect of this application.

A fourth aspect of this application provides a battery pack. The battery pack includes the battery module according to the third aspect of this application.

A fifth aspect of this application provides an electrical device. The electrical device includes at least one of the lithium-ion secondary battery according to the second aspect, the battery module according to the third aspect, or the battery pack according to the fourth aspect of this application.

### BENEFICIAL EFFECTS

In the positive electrode plate of this application, the olivine-structured phosphate compound is divided into a small-grained part and a large-grained part. The small-grained part is separately applied on both sides of the current collector to form a coating layer, and then the large-grained part is mixed with the layered transition metal oxide or pure layered transition metal oxide, and the mixture is applied onto the formed coating layer, thereby solving the problems of gelation during stirring and rapid fading of performance, and in turn, suppressing overdischarge on the surface of the layered transition metal oxide, improving the charge-discharge capabilities of the lithium-ion secondary battery, and enhancing the cycle stability.

### BRIEF DESCRIPTION OF DRAWINGS

FIG. 1 is a schematic structural diagram of a positive electrode plate according to an embodiment of this application;
FIG. 2 is a schematic diagram of a lithium-ion secondary battery according to an embodiment of this application;
FIG. 3 is an exploded view of a lithium-ion secondary battery shown in FIG. 2 according to an embodiment of this application;
FIG. 4 is a schematic diagram of a battery module according to an embodiment of this application;
FIG. 5 is a schematic diagram of a battery pack according to an embodiment of this application;
FIG. 6 is an exploded view of the battery pack shown in FIG. 5 according to an embodiment of this application; and
FIG. 7 is a schematic diagram of an electrical device that uses a lithium-ion secondary battery as a power supply according to an embodiment of this application;
FIG. 8 is a schematic diagram of cycle stability of a battery that uses a positive electrode plate prepared in Embodiment 1 of this application;
FIG. 9 is a schematic diagram of cycle stability of a battery that uses a positive electrode plate prepared in Embodiment 2 of this application;
FIG. 10 is a schematic diagram of cycle stability of a battery that uses a positive electrode plate prepared in Comparative Embodiment 1 of this application;
FIG. 11 is a schematic diagram of C-rate performance of a battery that uses a positive electrode plate prepared in Comparative Embodiment 2 of this application; and
FIG. 12 is a schematic diagram of cycle stability of a battery that uses a positive electrode plate prepared in Comparative Embodiment 3 of this application.

List of reference numerals:
1. battery pack; 2. upper box; 3. lower box; 4. battery module; 5. lithium-ion secondary battery; 51. housing; 52. electrode assembly; 53. top cap assembly.

### DETAILED DESCRIPTION OF EMBODIMENTS

The following discloses and describes in detail a negative current collector and a manufacturing method thereof, a negative electrode plate, a lithium-ion secondary battery, a battery module, a battery pack, and an electrical device of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a range of 60 to 120 and a range of 80 to 110 are set out for a given parameter, it is expectable that such ranges may be understood as 60 to 110 and 80 to 120. In addition, if lower-limit values 1 and 2 are set out, and if upper-limit values 3, 4, and 5 are set out, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Olivine-structured phosphate compounds such as lithium iron phosphate and lithium manganese iron phosphate are characterized by a wide range of raw material sources and a stable structure, and embrace a promising application prospect. However, the energy density of such compounds is relatively low, and the compounds are hardly applicable to the products that require a high energy density. The positive electrode materials such as layered transition metal oxide are of a relatively high energy density, and are therefore applied to the products that require a high energy density. However, the chemical properties of such materials are relatively active, the structure of such materials is not much stable, and the safety of the materials is relatively low. Therefore, the olivine-structured phosphate compound is mixed with the layered transition metal oxide at an appropriate mixing ratio, so as to be applicable to the products in different application scenarios and exhibit the advantages of both the olivine-structured phosphate compound and the layered transition metal oxide.

The olivine-structured phosphate compound is of relatively low kinetics and needs to be made into nanoparticles and carbon-coated before being commercially applicable. When mixed with the layered transition metal oxide, the olivine-structured phosphate compound may result in problems in terms of processing and performance. The problems include inapplicability of a binder. The binder applicable to a layered transition metal oxide is generally characterized by a large molecular weight and high polarity, and is prone to cause physical agglomeration of the olivine-structured phosphate compound made into nanoparticles. The solid-phase concentration polarization of the nano-grained olivine-structured phosphate compound is low, but the solid-phase concentration polarization of the layered transition metal oxide is generally high due to a large particle size. The nano-grained olivine-structured phosphate compound is prone to be wrapped in a surface of the large-grained layered transition metal oxide. An equilibrium potential difference is prone to occur due to a sharp difference in concentration polarization between the nano-grained olivine-structured phosphate compound and the layered transition metal oxide, thereby resulting in overdischarge on the surface of the layered transition metal oxide and deterioration of the cycle performance. The added nano-grained olivine-structured phosphate compound prolongs the liquid-phase diffusion path of the electrode plate, and results in insufficient exertion of the capacity of the layered transition metal oxide.

A lithium-ion secondary battery, a battery module, a battery pack, and an electrical device of this application are described below with due reference to drawings.

### Positive electrode plate

In an embodiment of this application, a positive electrode plate is provided.

The positive electrode plate of this application includes a current collector, a first coating layer applied on both sides of the current collector, and a second coating layer applied on a surface of the first coating layer.

As an example, the current collector includes two surfaces opposite to each other in a thickness direction of the current collector. The first coating layer is disposed on the two opposite surfaces of the current collector. The second coating layer is applied on the first coating layer.

In some embodiments, the current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE). The composite current collector can solve the problem that the battery is prone to thermal runaway caused by an internal short circuit, vacate more space in the battery for the active material to increase the energy density of the battery, maintain the long-term integrity of the electrode plate interface to improve the cycle life of the battery, and can be directly applied to power batteries of different specifications and systems.

The first coating layer is applied on both sides of the current collector. The first coating layer contains a small-grained olivine-structured phosphate compound, and a particle size of the small-grained olivine-structured phosphate compound is 0.5 to 2 µm. The second coating layer is applied on the surface of the first coating layer. The second coating layer contains a large-grained olivine-structured phosphate compound and a layered transition metal oxide; or a large-grained olivine-structured phosphate compound and a pure layered transition metal oxide. The particle size of the large-grained olivine-structured phosphate compound is larger than the particle size of the small-grained olivine-structured phosphate compound.

In the first coating layer, the small-grained olivine-structured phosphate compound possesses a large specific surface area, and, if applied on the electrode, will lead to a relatively long liquid-phase diffusion path and low kinetic performance of the battery cell. Therefore, the small-grained olivine-structured phosphate compound is applied separately on both sides of the current collector, so as to shorten the liquid-phase diffusion path of the electrode on the upper layer, and significantly improve the charge-discharge capabilities of the battery cell. Moreover, the small-grained olivine-structured phosphate compound itself possesses a large electrochemistry surface area, and, even if applied on both sides of the current collector, still leads to relatively high kinetic performance of the electrode, thereby somewhat compensating for the deterioration of the charge-discharge capabilities brought about by the lower-layer material due to a long diffusion path.

In addition, the adhesion of the layered transition metal oxide material generally needs to be increased by using a high-polarity binder with a relatively large molecular weight. Such a binder used in the olivine-structured phosphate compound is prone to lead to agglomeration, and give rise to physical gelation. Therefore, by stirring the small-grained olivine-structured phosphate compound to form separate slurry and applying the slurry, this application can avoid the problem that the slurry gels due to mismatch of the binder when the small-grained olivine-structured phosphate compound is mixed and stirred with the layered transition metal oxide material.

Further, in the second coating layer, the large-grained olivine-structured phosphate compound is mixed with the layered transition metal oxide or pure layered transition metal oxide. The mixture is applied onto the first coating layer to exert the advantages of both materials.

In some embodiments, the olivine-structured phosphate compound includes at least one selected from lithium iron phosphate (LiFePO₄) or lithium manganese iron phosphate (LiMnPO₄). The lithium iron phosphate (LiFePO₄) and lithium manganese iron phosphate (LiMnPO₄) used as the olivine-structured phosphate compound assumes a polyanionic framework structure. The fundamental structural unit of the polyanionic framework structure is a PO₄ tetrahedron. A strong PO covalent bond in the phosphate radical in the fully charged state stabilizes oxygen atoms, and prevents the compound from being oxidized to produce and release oxygen. This structure endows the olivine-structured phosphate compound with a stable charge-discharge plateau, thereby achieving high structural stability during the charge and discharge, high safety, and excellent cycle performance.

The layered transition metal oxide is at least one selected from lithium cobalt oxide (LiCoO₂), lithium nickel cobalt manganese oxide (LiNiMnCoO₂), or lithium nickel cobalt aluminum oxide (LiNiCoAlO₂). The pure layered transition metal oxide is at least one selected from lithium nickel cobalt manganese oxide or lithium nickel cobalt aluminum oxide. One of such materials may be used alone, or two or more thereof may be used in combination. The layered transition metal oxide or pure layered transition metal oxide exhibits high C-rate performance and long-term cycle stability, and, when mixed with the olivine-structured phosphate compound, can exert the advantages of both materials.

In some embodiments, the first coating layer and the second coating layer further optionally include a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the first coating layer and the second coating layer further optionally include a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared in the following process: sieving the olivine-structured phosphate compound into a large-grained part and a small-grained part, and sieving out the small-grained part with a particle size of 0.01 to 10 µm as a small-grained olivine-structured phosphate compound; and sieving out the large-grained part with a particle size larger than the small-grained part as a large-grained olivine-structured phosphate compound.

Next, dispersing the small-grained olivine-structured phosphate compound, a binder, conductive carbon, and any other constituents into a solvent (such as N-methyl-pyrrolidone), mixing the constituents, and applying the mixture on both sides of the current collector to form a first coating layer, where the thickness of the first coating layer is 2 to 200 µm, and preferably 30 to 100 µm. By controlling the thickness of the first coating layer to fall within the above range, the kinetic performance of the electrode can be improved, the deterioration of the charge-discharge capabilities of the lower-layer material caused by a long diffusion path can be compensated for, and the coating is prevented from being detached from the electrode plate.

Subsequently, dispersing the large-grained olivine-structured phosphate compound, the layered transition metal oxide or pure layered transition metal oxide, a binder, conductive carbon, and any other constituents into a solvent (such as N-methylpyrrolidone), mixing the constituents, and applying the mixture on the surface of the first coating layer formed on both sides of the aluminum foil, so as to form a second coating layer. The thickness of the second coating layer is 2 to 400 µm, and preferably 50 to 200 µm. By controlling the thickness of the second coating layer to fall within the above range, this application achieves high processing performance, high kinetic performance, and a high energy density.

Further, performing steps such as oven-drying and cold-pressing to obtain a positive electrode plate of this application.

### Lithium-ion secondary battery

In an embodiment of this application, a lithium-ion secondary battery is provided.

The lithium-ion secondary battery of this application includes the positive electrode plate of this application disclosed above, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Negative electrode plate]

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the lithium-ion secondary battery may include an outer package. The outer package may be configured to package the electrode assembly and the electrolyte.

In some embodiments, the outer package of the lithium-ion secondary battery may be a hard shell such as a hard plastic shell, an aluminum shell, a steel shell, or the like. Alternatively, the outer package of the lithium-ion secondary battery may be a soft package such as a pouch-type soft package. The soft package may be made of plastic such as polypropylene, polybutylene terephthalate, or polybutylene succinate.

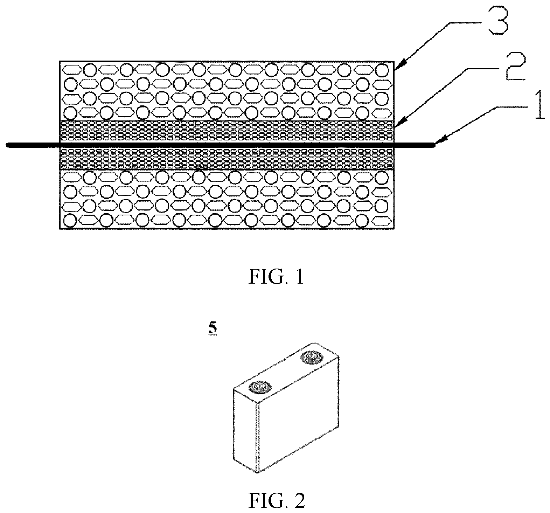

The shape of the lithium-ion secondary battery is not particularly limited in this application, and may be cylindrical, prismatic or any other shape. FIG. 2 shows a prismatic lithium-ion secondary battery 5 as an example.

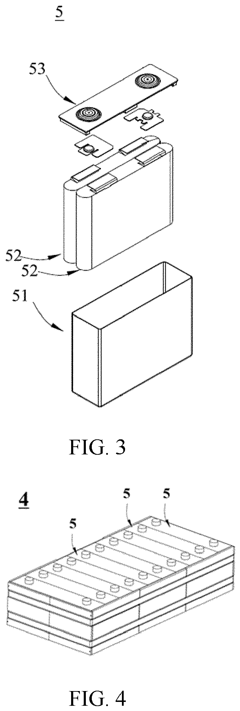

In some embodiments, referring to FIG. 3, the outer package may include a housing 51 and a cap plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to seal the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a lithium-ion secondary battery 5 may be one or more, and may be selected by a person skilled in the art as actually required.

### Battery module

In some embodiments, the lithium-ion secondary battery may be assembled to form a battery module. The battery module may include one or more lithium-ion secondary batteries, and the specific number of lithium-ion batteries in a battery module may be selected by a person skilled in the art depending on practical applications and capacity of the battery module.

FIG. 4 shows a battery module 4 as an example. Referring to FIG. 4, in the battery module 4, a plurality of lithium-ion secondary batteries 5 may be arranged sequentially along a length direction of the battery module 4. Alternatively, the secondary batteries may be arranged in any other manner. Further, the plurality of lithium-ion secondary batteries 5 may be fixed by a fastener.

Optionally, the battery module 4 may further include a shell that provides an accommodation space. The plurality of lithium-ion secondary batteries 5 are accommodated in the accommodation space.

### Battery pack

In some embodiments, the battery module may be assembled to form a battery pack. The battery pack may include one or more battery modules, and the specific number of battery modules in a battery pack may be selected by a person skilled in the art depending on practical applications and capacity of the battery pack.

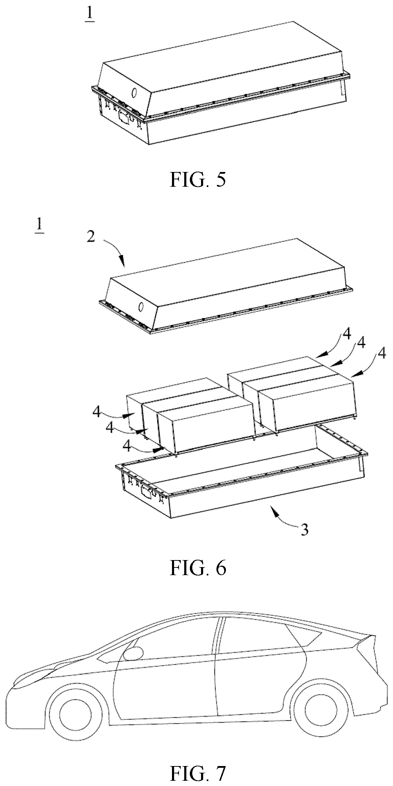

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### Electrical device

Further, this application provides an electrical device. The electrical device includes at least one of the lithium-ion secondary battery, the battery module, or the battery pack according to this application. The lithium-ion secondary battery, battery module, or battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The lithium-ion secondary battery, battery module, or battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. To meet the requirements of the electrical device for a high power and a high energy density of the lithium-ion secondary battery, the electrical device may employ a battery pack or a battery module.

In another example, the device may be a mobile phone, a tablet computer, a notebook computer, or the like. The device is generally required to be thin and light, and may use a lithium-ion secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

In Embodiment 1, lithium iron phosphate particles with a diameter of 0.01 to 10 µm are used as an olivine-structured phosphate compound, and lithium nickel cobalt manganese oxide particles with a diameter of 0.5 to 20 µm are used as a layered transition metal oxide.

The lithium iron phosphate particles with a diameter of 0.01 to 10 µm are sieved by using a 12500-mesh sieve, so as to sieve out lithium iron phosphate particles with a diameter below 1 µm, and specifically 0.01 to 1 µm, as small-grained lithium iron phosphate; and sieve out lithium iron phosphate particles with a diameter greater than 1 µm, specifically 1 to 10 µm, as large-grained lithium iron phosphate.

Next, the small-grained lithium iron phosphate, a binder, and conductive carbon are mixed, and the mixture is applied on both sides of current collector aluminum foil to form a first coating layer, where the thickness of the first coating layer is 50 µm.

Subsequently, the large-grained lithium iron phosphate, the lithium nickel cobalt manganese oxide particles with a diameter of 0.5 to 20 µm, a binder, and conductive carbon are mixed, and the mixture is applied on the surface of the first coating layer formed on both sides of the aluminum foil, so as to form a second coating layer. The thickness of the second coating layer is 150 µm.

In this way, the positive electrode plate of Embodiment 1 of this application, which assumes the structure shown in FIG. 1, is formed.

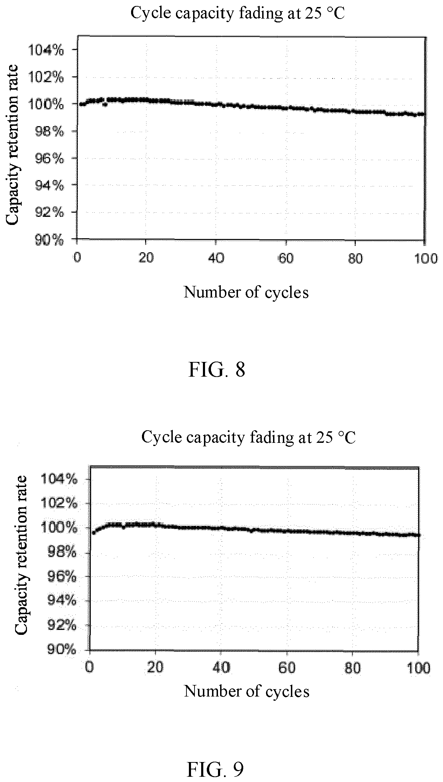

Further, the positive electrode plate is combined with the graphite negative electrode plate, an electrolyte solution (1 mol/L LiPF₆ in EC/DMC/DEC), and a separator (commercial 12 µm PE) to form a prismatic aluminum-shell battery. In a 25 °C environment, the battery is charged at a current of 1 C until the voltage reaches 4.35 V, and then discharged at a current of 1 C until the voltage drops to 2.5 V. The discharge capacity retention rate is recorded, and the cycle characteristics of the battery at 25 °C are tested and determined. As shown in FIG. 8, the battery exhibits good cycle stability at 25 °C.

### Embodiment 2

In Embodiment 2, the positive electrode plate of Embodiment 2 is prepared according to the same method as Embodiment 1, except that the particles are sieved by using a 25000-mesh sieve of a hole diameter 0.5 µm, so as to sieve out small-grained lithium iron phosphate of a diameter of 0.01 to 0.5 µm and large-grained lithium iron phosphate with a diameter of 0.5 to 10 µm.

Further, the positive electrode plate is combined with the graphite negative electrode plate, an electrolyte solution (1 mol/L LiPF₆ in EC/DMC/DEC), and a separator (commercial 12 µm PE) to form a prismatic aluminum-shell battery. The cycle characteristics of the battery at 25 °C are tested and determined. As shown in FIG. 9, the battery exhibits good cycle stability at 25 °C.

### Embodiment 3

In Embodiment 3, the positive electrode plate of Embodiment 3 is prepared according to the same method as Embodiment 1, except that the particles are sieved by using a 6250-mesh sieve of a hole diameter 2 µm, so as to sieve out small-grained lithium iron phosphate of a diameter of 0.01 to 2 µm and large-grained lithium iron phosphate with a diameter of 2 to 10 µm.

Further, a prismatic aluminum-shell battery containing the positive electrode plate of Embodiment 3 is prepared in the same way, and the cycle characteristics of the battery at 25 °C are tested and determined. The battery exhibits good cycle stability.

### Embodiments 4 to 7

In Embodiments 4 to 7, the positive electrode plates of Embodiments 4 to 7 are prepared according to the same method as Embodiment 1 except the thickness of the first coating layer and/or the thickness of the second coating layer.

Further, prismatic aluminum-shell batteries each containing the positive electrode plate of Embodiments 4 to 7 are prepared in the same way, and the cycle characteristics of the batteries at 25 °C are tested and determined. All the batteries exhibit good cycle stability at 25 °C.

### Embodiment 8

In Embodiment 8, the positive electrode plate is prepared according to the same method as Embodiment 1 except that lithium manganese iron phosphate particles with a diameter of 0.01 to 10 µm are used as an olivine-structured phosphate compound, and lithium nickel cobalt aluminum oxide particles with a diameter of 0.5 to 20 µm are used as a layered transition metal oxide.

Further, prismatic aluminum-shell batteries each containing the positive electrode plate of Embodiments 4 to 7 are prepared in the same way, and the cycle characteristics of the batteries at 25 °C are tested and determined. All the batteries exhibit good cycle stability at 25 °C.

### Comparative Embodiments

### Comparative Embodiment 1

In Comparative Embodiment 1, the positive electrode plate of Comparative Embodiment 1 is prepared according to the same method as Embodiment 1, except that the particles are sieved by using a 31250-mesh sieve of a hole diameter 0.4 µm, so as to sieve out small-grained lithium iron phosphate of a diameter of 0.01 to 0.4 µm and large-grained lithium iron phosphate with a diameter of 0.4 to 10 µm, the thickness of the first coating layer is 30 µm, and the thickness of the second coating layer is 170 µm.

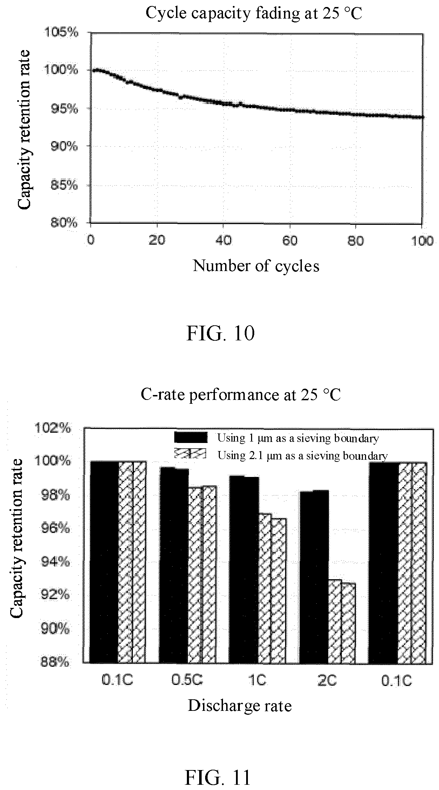

Further, a prismatic aluminum-shell battery containing the positive electrode plate of Comparative Embodiment 1 is prepared in the same way, and the cycle characteristics of the battery at 25 °C are tested and determined. As shown in FIG. 10, the battery exhibits low cycle stability, and the capacity fades quickly.

It is speculated that the reason is that the 0.4 µm layered phosphate compound and the layered transition metal oxide material are mixed in the upper layer, and an uncontrollable equilibrium current is generated between particles due to a difference in the solid-phase concentration polarization during the charge and discharge, thereby resulting in overdischarge of the layered transition metal oxide material and accelerating the capacity fading.

### Comparative Embodiment 2

In Comparative Embodiment 2, the positive electrode plate of Comparative Embodiment 2 is prepared according to the same method as Embodiment 1, except that the particles are sieved by using a 5900-mesh sieve of a hole diameter 2.1 µm, so as to sieve out small-grained lithium iron phosphate of a diameter of 0.01 to 2.1 µm and large-grained lithium iron phosphate with a diameter of 2.1 to 10 µm, the thickness of the first coating layer is 50 µm, and the thickness of the second coating layer is 150 µm.

Further, a prismatic aluminum-shell battery containing the positive electrode plate of Comparative Embodiment 2 is prepared in the same way, and the cycle characteristics of the battery at 25 °C are tested and determined. As shown in FIG. 11, although the battery exhibits good cycle stability, the C-rate performance is deteriorated drastically.

### Comparative Embodiment 3

In Comparative Embodiment 3, the positive electrode plate of Comparative Embodiment 3 is prepared according to the same method as Embodiment 1 except that:

the small-grained lithium iron phosphate particles with a diameter of 0.01 to 1 µm, lithium nickel cobalt manganese oxide particles with a diameter of 0.5 to 20 µm, a binder, and conductive carbon are mixed, and the mixture is applied on both sides of current collector aluminum foil to form a first coating layer, where the thickness of the first coating layer is 50 µm.

Subsequently, the large-grained lithium iron phosphate with a diameter of 1 to 10 µm, the lithium nickel cobalt manganese oxide particles with a diameter of 0.5 to 20 µm, a binder, and conductive carbon are mixed, and the mixture is applied on the surface of the first coating layer formed on both sides of the aluminum foil, so as to form a second coating layer. The thickness of the second coating layer is 150 µm.

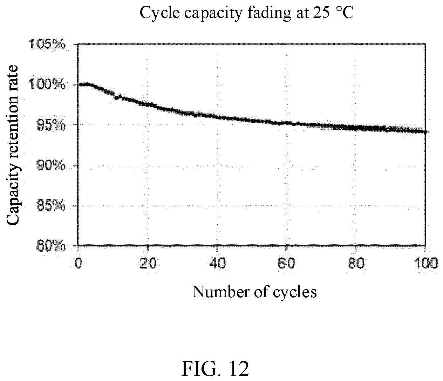

Further, a prismatic aluminum-shell battery containing the positive electrode plate of Comparative Embodiment 3 is prepared in the same way, and the cycle characteristics of the battery at 25 °C are tested and determined. As shown in FIG. 12, the battery exhibits low cycle stability, and the problem of gelation during stirring occurs.

It is speculated that the reason is that the particle size of the small-grained lithium iron phosphate as an olivine-structured phosphate salt is less than that of the lithium nickel cobalt manganese oxide particles as a layered transition metal oxide, and the two materials are mixed and applied in the first coating layer on both sides of the aluminum foil, so that a difference in the solid-phase concentration polarization occurs, thereby resulting in an uncontrollable equilibrium current, and causing the layered transition metal oxide to attenuate quickly. In addition, the stirring of the small-grained lithium iron phosphate mixed with the high-pH layered transition metal oxide material incurs the problem of inapplicability of the binder, and results in severe gelation during stirring and makes the production difficult.

### Comparative Embodiment 4

In Comparative Embodiment 4, the positive electrode plate of Comparative Embodiment 4 is prepared according to the same method as Embodiment 1 except that:

The large-grained lithium iron phosphate with a diameter of 1 to 10 µm, a binder, and conductive carbon are mixed, and the mixture is applied on both sides of current collector aluminum foil to form a first coating layer, where the thickness of the first coating layer is 50 µm.

Subsequently, the small-grained lithium iron phosphate with a diameter of 0.01 to 1 µm, the lithium nickel cobalt manganese oxide particles with a diameter of 0.5 to 20 µm, a binder, and conductive carbon are mixed, and the mixture is applied on the surface of the first coating layer formed on both sides of the aluminum foil, so as to form a second coating layer. The thickness of the second coating layer is 150 µm.

Further, a prismatic aluminum-shell battery containing the positive electrode plate of Comparative Embodiment 4 is prepared in the same way, and the cycle characteristics of the battery at 25 °C are tested and determined. The battery exhibits low cycle stability.

**Table 1**

| Test item | First coating layer | | | Second coating layer | | | Cycle characteristics test |
|---|---|---|---|---|---|---|---|
| | Olivine-structured phosphate compound and particle size thereof | Layered transition metal oxide | Thickness | Olivine-structured phosphate compound and particle size thereof | Layered transition metal oxide | Thickness | |
| Embodiment 1 | Small-grained lithium iron phosphate 0.01 to 1 µm | - | 50 µm | Large-grained lithium iron phosphate 1 to 10 µm | Lithium nickel cobalt manganese oxide particles 0.5 to 20 µm | 150 µm | High stability, high C-rate performance |
| Embodiment 2 | Small-grained lithium iron phosphate 0.01 to 0.5 µm | - | 50 µm | Large-grained lithium iron phosphate 0.5 to 10 µm | Lithium nickel cobalt manganese oxide particles 0.5 to 20 µm | 150 µm | High stability, high C-rate performance |
| Embodiment 3 | Small-grained lithium iron phosphate 0.01 to 2 µm | - | 50 µm | Large-grained lithium iron phosphate 2 to 10 µm | Lithium nickel cobalt manganese oxide particles 0.5 to 20 µm | 150 µm | High stability, high C-rate performance |
| Embodiment 4 | Small-grained lithium iron phosphate 0.01 to 1 µm | - | 2 µm | Large-grained lithium iron phosphate 1 to 10 µm | Lithium nickel cobalt manganese oxide particles 0.5 to 20 µm | 2 um | High stability, high C-rate performance |
| Embodiment 5 | Small-grained lithium iron phosphate 0.01 to 1 µm | - | 200 µm | Large-grained lithium iron phosphate 1 to 10 µm | Lithium nickel cobalt manganese oxide particles 0.5 to 20 µm | 200 µm | High stability, high C-rate performance |
| Embodiment 6 | Small-grained lithium iron phosphate 0.01 to 1 µm | - | 30 µm | Large-grained lithium iron phosphate 1 to 10 µm | Lithium nickel cobalt manganese oxide particles 0.5 to 20 µm | 50 µm | High stability, high C-rate performance |
| Embodiment 7 | Small-grained lithium iron phosphate 0.01 to 1 µm | - | 100 µm | Large-grained lithium iron phosphate 1 to 10 µm | Lithium nickel cobalt manganese oxide particles 0.5 to 20 µm | 400 µm | High stability, high C-rate performance |
| Embodiment 8 | Small-grained lithium manganese iron phosphate 0.01 to 1 µm | - | 50 µm | Large-grained lithium manganese iron phosphate 1 to 10 µm | Lithium nickel cobalt aluminum oxide particles 0.5 to 20 µm | 150 µm | High stability, high C-rate performance |
| Comparative Embodiment 1 | Small-grained lithium iron phosphate 0.01 to 0.4 µm | - | 50 µm | Large-grained lithium iron phosphate 0.4 to 10 µm | Lithium nickel cobalt manganese oxide particles 0.5 to 20 µm | 150 µm | Low stability, high C-rate performance |
| Comparative Embodiment 2 | Small-grained lithium iron phosphate 0.01 to 2.1 µm | - | 50 µm | Large-grained lithium iron phosphate 2.1 to 10 µm | Lithium nickel cobalt manganese oxide particles 0.5 to 20 µm | 150 µm | High stability, low C-rate performance |
| Comparative Embodiment 3 | Small-grained lithium iron phosphate 0.01 to 1 µm | Lithium nickel cobalt manganese oxide particles 0.5 to 20 µm | 50 µm | Large-grained lithium iron phosphate 1 to 10 µm | Lithium nickel cobalt manganese oxide particles 0.5 to 20 µm | 150 µm | Low stability, high C-rate performance |
| Comparative Embodiment 4 | Large-grained lithium iron phosphate 1 to 10 µm | - | 50 µm | Small-grained lithium iron phosphate 0.01 to 1 µm | Lithium nickel cobalt manganese oxide particles 0.5 to 20 µm | 150 µm | Low stability, low C-rate performance |

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A positive electrode plate, wherein
the positive electrode plate comprises: a current collector, a first coating layer applied on both sides of the current collector, and a second coating layer applied on a surface of the first coating layer;
the first coating layer contains a small-grained olivine-structured phosphate compound, and a particle size of the small-grained olivine-structured phosphate compound is 0.5 to 2 µm; and
the second coating layer contains: a large-grained olivine-structured phosphate compound and a layered transition metal oxide; or a large-grained olivine-structured phosphate compound and a pure layered transition metal oxide, and a particle size of the large-grained olivine-structured phosphate compound is larger than a particle size of the small-grained olivine-structured phosphate compound.

2. The positive electrode plate according to claim 1, wherein
the olivine-structured phosphate compound is at least one selected from lithium iron phosphate or lithium manganese iron phosphate.

3. The positive electrode plate according to claim 1 or 2, wherein
the layered transition metal oxide is at least one selected from lithium cobalt oxide, lithium nickel cobalt manganese oxide, or lithium nickel cobalt aluminum oxide; and
the pure layered transition metal oxide is at least one selected from lithium nickel cobalt manganese oxide or lithium nickel cobalt aluminum oxide.

4. The positive electrode plate according to any one of claims 1 to 3, wherein a thickness of the first coating layer is 2 to 200 µm, and optionally 30 to 100 µm.

5. The positive electrode plate according to any one of claims 1 to 4, wherein a thickness of the second coating layer is 2 to 400 µm, and optionally 50 to 200 µm.

6. A lithium-ion secondary battery, wherein the lithium-ion secondary battery comprises the positive electrode plate according to any one of claims 1 to 5.

7. A battery module, wherein
the battery module comprises the lithium-ion secondary battery according to claim 6.

8. A battery pack, wherein
the battery pack comprises the battery module according to claim 7.

9. An electrical device, wherein
the electrical device comprises at least one of the lithium-ion secondary battery according to claim 6, the battery module according to claim 7, or the battery pack according to claim 8.
